# FASCICULE DE BREVET EUROPEEN

(11) **EP 3 212 302 B1**
(45) Date de publication et mention de la délivrance du brevet: **07.10.2020**
(21) Numéro de dépôt: 15807947.5
(22) Date de dépôt: 27.10.2015
(51) Int. Cl.: B01D 29/52, B01D 29/96

(54) **DISPOSITIF DE FILTRATION D'HUILE DE LAMINAGE**
VORRICHTUNG ZUR FILTRIERUNG VON WALZÖL
DEVICE FOR FILTERING ROLLING OIL

(30) Priorité: 28.10.2014 FR 1460339
(43) Date de publication de la demande: 06.09.2017
(73) Titulaire: FIVES DMS, 59139 Noyelles les Seclin (FR)
(72) Inventeur: SEQUEIRA, David, 59600 Maubeuge (FR); BASSEZ, Cédric, 62800 Lievin (FR); ERNST DE LA GRAETE, Conrad, 59493 Villeneuve D'Ascq (FR)
(74) Mandataire: Bureau Duthoit Legros Associés
(86) Numéro de dépôt international: PCT/FR2015/052885
(87) Numéro de publication internationale: WO 2016/066943

(56) Documents cités:
- CN-A- 1 546 900
- US-A- 4 237 011

## Description

L'invention concerne un dispositif de filtration d'huile de laminage, du type à plateaux, ainsi qu'une installation de recyclage et de filtration d'huile de laminage équipée d'un tel dispositif de filtration.

Le domaine de l'invention est celui du recyclage de l'huile de laminage dans les laminoirs à froid, et plus particulièrement les laminoirs « *Sendzimir* », en particulier à vingt cylindres, connus sous l'appellation « 20-Hi » pour l'homme du métier ; un exemple de réalisation d'un tel laminoir à vingt cylindres est illustré dans les documents US 5 193 377 et US 5 471 859. Dans un tel laminoir, les cylindres sont répartis en un groupe inférieur et un groupe supérieur ; plus précisément, ces groupes présentent une structure symétrique et comportent chacun dix cylindres dont : un cylindre de travail, deux premiers cylindres intermédiaires, trois seconds cylindres intermédiaires, et quatre cylindres d'appui, ou galets d'appui, qui sont à l'extérieur de l'arrangement.

Dans un laminoir, en particulier dans un laminoir à 20 cylindres, les opérations de laminage sont effectuées en projetant de l'huile sur les cylindres et la bande. Cette opération de lubrification et/ou de refroidissement est mise en œuvre par une installation de recyclage qui comprend, successivement, disposé entre une sortie d'huile sale du laminoir et une entrée pour de l'huile propre, un circuit comprenant :
- un réservoir d'huile sale,
- un système de filtration à cartouches,
- un réservoir d'huile propre.

Un premier système de pompe, en amont du système de filtration suivant le sens d'écoulement de l'huile, est associé au système de filtration et permet d'amener l'huile au système de filtration.

Un deuxième système de pompe, situé en aval du système de filtration, permet d'aspirer l'huile au travers du média filtrant et de pousser l'huile ainsi recyclée jusqu'au reservoir d'huile propre.

Un troisième système de pompe, situé en aval du réservoir d'huile propre, permet d'amener l'huile au laminoir. Une telle architecture générale d'installation de recyclage et de filtration est connue du document CN 203355436U, et est mise en œuvre industriellement pour des laminoirs 20 cylindres depuis les années 1970. Classiquement, l'installation peut encore comprendre des échangeurs destinés à contrôler la température de l'huile recyclée, ainsi que des valves de contrôle permettant de contrôler le débit de fluide avant son entrée dans le laminoir.

Depuis cette date, il est connu d'utiliser, pour le système de filtration, plusieurs dispositifs de filtration du type à plateaux, bien souvent connus pour l'homme du métier sous l'appellation « Supamic Filter » du nom de son fabricant d'origine, et disposés sur le circuit de manière à réaliser une filtration de l'huile en parallèle. Un tel dispositif de filtration à plateaux est illustré schématiquement à la figure 1 du document CN 203355436U, identifié par le repère 5.

Le document CN 203154922U décrit plus en détail la structure d'un dispositif de filtration à plateaux typiquement utilisé pour la filtration des laminoirs Sendzimir depuis les années 1970.

Un tel dispositif de filtration comprend une cuve, typiquement cylindrique à l'intérieur de laquelle sont superposés plusieurs « plateaux », amovibles, répartis sur la hauteur de la cuve, et empilés les uns sur les autres grâce à des systèmes de pieds. Chacun des éléments plateaux est un élément creux sur lequel sont fixées un grand nombre de cartouches de filtration, en parallèle, typiquement par vissage de l'extrémité supérieure de la cartouche sur des parties filetées correspondante du plateau.

La cuve comprend une ouverture d'entrée pour l'huile sale, la filtration étant réalisée au travers du média filtrant de la cartouche, de l'extérieur vers l'intérieur, l'huile filtrée par la cartouche étant collectée dans le plateau, qui est un élément creux, puis conduit vers une sortie du plateau pour l'huile propre. Les sorties d'huile des différents plateaux sont respectivement connectées, de manière étanche, à des ouvertures réparties sur la hauteur de la cuve, grâce à des jeux de brides.

Au bout d'un certain temps de fonctionnement, il est nécessaire de remplacer les cartouches du dispositif de filtration ; selon la procédure actuelle, l'opérateur commence par ouvrir le couvercle, à l'extrémité supérieure de la cuve, puis retire les différents plateaux, un par un, à l'aide d'un système de levage, du plateau le plus supérieur, et jusqu'au dernier plateau en fond du cuve. Une fois le plateau retiré hors de la cuve, les différentes cartouches peuvent être dévissées et remplacées. Toutefois, selon les constatations de l'inventeur, dans les dispositifs de l'état de la technique, pour chaque plateau, et préalablement à l'opération de retrait et de levage du plateau, l'opérateur doit nécessairement descendre dans la cuve pour dévisser les vis des jeux de brides et retirer les joints entre la sortie d'huile du plateau et l'ouverture correspondante de la cuve.

Le but de la présente invention est de pallier les inconvénients précités en proposant un dispositif de filtration du type à plateaux dont la maintenance, en particulier les opérations de remplacement des cartouches de filtration, est grandement facilitée.

D'autres buts et avantages de la description apparaîtront au cours de la description qui va suivre qui n'est donnée qu'à titre indicatif et qui n'a pas pour but de la limiter.

Aussi l'invention concerne un dispositif de filtration selon la revendication 1.

Selon l'invention, ledit raccord comprend une première partie solidaire dudit au moins un élément plateau et une deuxième partie solidaire de la cuve, aptes à coopérer mutuellement par l'intermédiaire d'un joint pour assurer une connexion étanche entre la sortie d'huile dudit élément plateau et la sortie correspondante de la cuve.

Selon un premier mode de réalisation le dispositif présente plusieurs éléments plateaux superposés dans le volume intérieur de la cuve, la connexion de chaque élément plateau à la sortie correspondante de la cuve étant réalisée au moyen dudit raccord et les deux parties dudit raccord sont agencées de telle façon que la connexion étanche des deux parties du raccord, et inversement leur déconnexion, est assurée uniquement par le déplacement vertical dudit élément plateau dans ladite cuve, les positions des différents raccords correspondant aux différents éléments plateaux étant décalées angulairement autour de l'axe de la cuve.

Les opérations de déconnexion et de connexion peuvent être réalisées avantageusement sans intervention d'un opérateur dans la cuve, et contrairement à l'état de la technique connu du demandeur.

Selon des caractéristiques optionnelles de l'invention selon le premier mode de réalisation, prises seules ou en combinaison :
- dans ladite position de connexion dudit raccord, la compression du joint assurant l'étanchéité entre la première partie et la deuxième partie du raccord est assurée uniquement par utilisation de la masse dudit élément plateau et des cartouches de filtration qu'il supporte ;
- le dispositif présente un système de réglage de la répartition de la masse dudit élément plateau sur le joint ;
- le dispositif présente des moyens de guidage verticaux disposés entre la cuve et ledit élément plateau, agencés de manière à garantir le bon positionnement relatif des deux parties du raccord lorsque ledit élément plateau est descendu dans ladite cuve ;
- les moyens de guidage comprennent plusieurs rails de guidage, orientés verticalement dans la cuve et fixés à cette dernière, ainsi que des parties de guidage solidaires dudit élément plateau, destinées à coopérer avec lesdits rails de guidage.
- les parties de guidages solidaires dudit élément plateau comprenant des galets destinés à être insérés dans le volume intérieur des rails de guidage ;
- le dispositif présente des butées destinées à stopper la course verticale dudit élément plateau dans ladite cuve et à un niveau correspondant permettant la connexion étanche des deux parties du raccord.
- les différents éléments plateaux des différents niveaux partagent les mêmes rails de guidage,
- les parties de guidages solidaires desdits éléments plateaux, notamment les galets, sont de dimensions croissantes, dudit élément plateau de niveau le plus supérieur, vers ledit élément plateau de niveau le plus inférieur,
- les butées destinées à stopper les courses des différents éléments plateaux comprennent des réductions de section, dans les rails de guidage, chacune des réductions de section étant destinée à assurer le blocage d'une partie de guidage appartenant à un élément plateau déterminé et de telle façon qu'une partie de guidage de plus petite dimension traverse la réduction de section, sans bloquer ledit élément plateau correspondant.

Selon un mode de réalisation, les galets sont disposés diamétralement opposés sur ledit élément plateau et destinés à coopérer avec deux rails de guidage de ladite cuve, lesdites butées coopérant avec les galets dudit plateau de manière à autoriser un pivotement dudit élément plateau autour de l'axe des galets sensiblement diamétral à l'élément plateau.

Avantageusement, le dispositif de réglage de la répartition de la masse dudit élément plateau sur le joint peut utiliser cette possibilité de pivotement et comprend à cet effet un système d'appui réglable entre ledit élément plateau et une partie fixe de la cuve, disposé diamétralement opposé sur ledit élément plateau par rapport audit raccord.

L'invention concerne encore une installation de recyclage et de filtration d'huile d'un laminoir comprenant un circuit d'huile comprenant successivement:
- un réservoir d'huile sale,
- un système de filtration comprenant un ou plusieurs dispositifs selon l'invention,
- un réservoir d'huile propre.

L'invention sera mieux comprise à la lecture de la description suivante accompagnée des dessins en annexe parmi lesquels :
- La figure 1 est une vue d'un dispositif de filtration d'huile de laminage, à cinq plateaux et tel que connu de l'état de la technique ;
- La figure la est une photographie d'un élément plateau d'un dispositif selon la figure 1 ;
- La figure 1b est une vue partielle et en transparence du dispositif de la figure 1, illustrant plus particulièrement la connexion des plateaux par l'intermédiaire de jeux de brides selon l'état de la technique,
- La figure 2 est une vue d'un dispositif de filtration conforme à l'invention selon un mode de réalisation ;
- La figure 3 est une vue de détail de la figure 2, selon un plan de coupe vertical, et illustrant un raccord selon l'invention permettant la réalisation d'une connexion étanche, et sans besoin d'une intervention d'un opérateur dans ladite cuve,
- La figure 4 est une vue de coupe du dispositif de la figure 2, selon un plan de coupe vertical,
- La figure 5 est une vue de coupe du dispositif de la figure 2, selon un plan de coupe vertical, illustrant les rails de guidage des éléments plateaux,
- La figure 6 est une vue de coupe selon un plan horizontal, illustrant la coopération entre un rail de guidage solidaire de la cuve et un galet solidaire d'un élément plateau,
- La figure 7 est une vue de détail d'un rail de guidage, ainsi que de ses réductions de section à fonction de butée pour les galets,
- La figure 8 est une vue de dessus de la cuve (les éléments plateaux présents),
- La figure 9 est un vue selon une coupe horizontale d'un dispositif de filtration conforme à un mode de réalisation qui ne fait pas parti de la présente invention.
- La figure 10 est une vue de détail du raccord entre l'un des éléments plateaux et la sortie du raccord, en position déconnectée du raccord, autorisant le retrait et le levage du plateau,
- La figure 11 est une vue de détail du raccord de la figure 10, en position connectée du raccord,

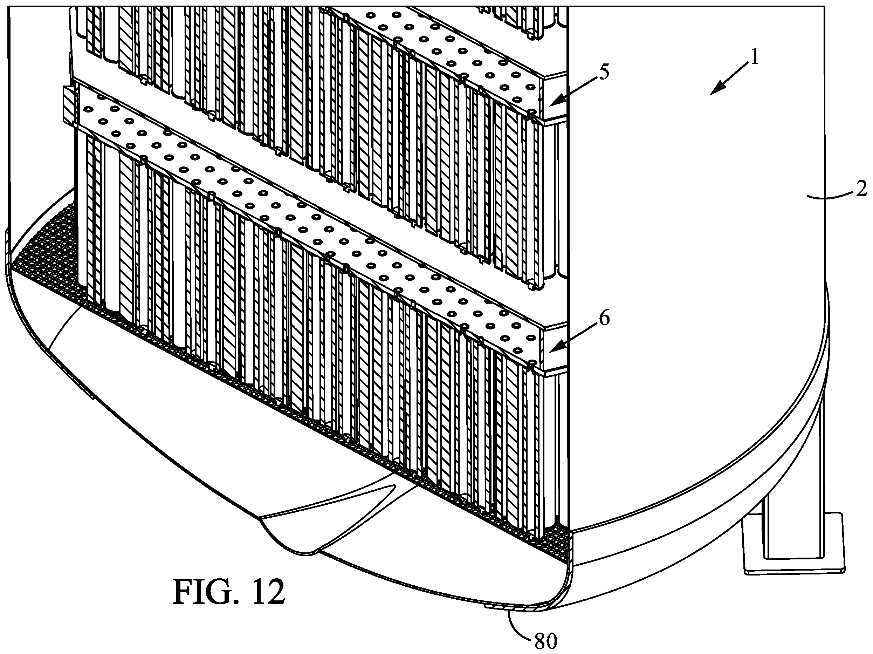

- La figure 12 est une vue de coupe verticale, en fond de cuve, illustrant plus particulièrement une grille de sécurité.

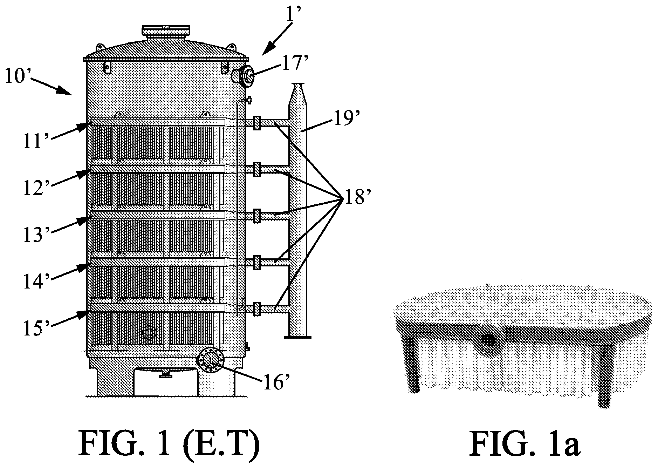

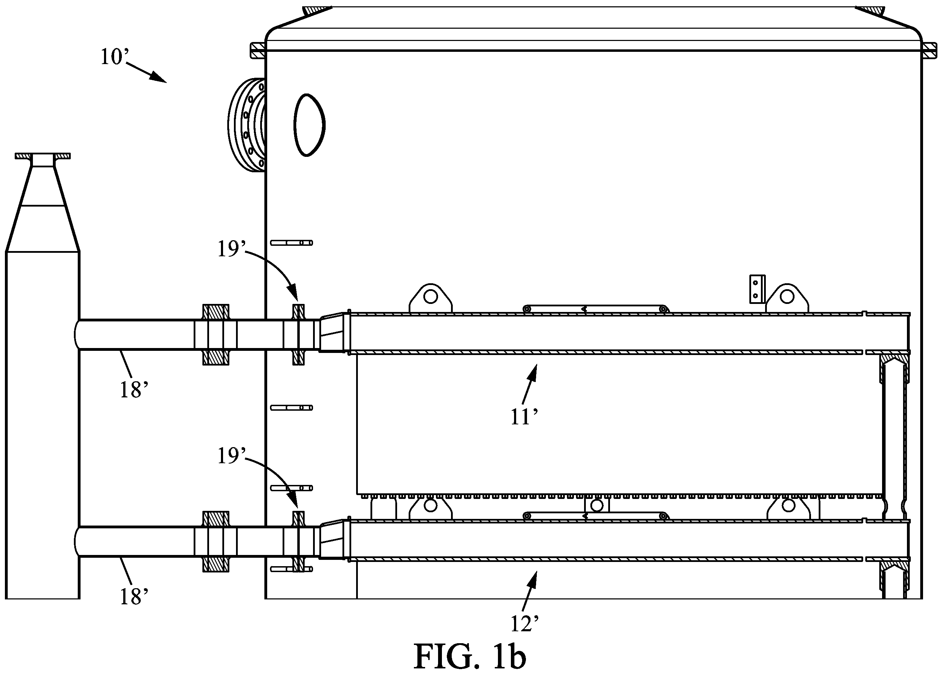

Nous commençons tout d'abord par la description d'un dispositif de filtration à cinq éléments plateaux, et tel que connu dans l'état de la technique, bien souvent connu par l'homme du métier sous l'appellation « *Supamic filter* » du nom de son fabriquant d'origine. Un tel dispositif de filtration comprend, tel qu'illustré à la figure 1, une cuve 10', typiquement cylindrique à l'intérieur de laquelle sont superposés plusieurs «plateaux», amovibles, repérés 11', 12', 13', 14' et 15', répartis sur la hauteur de la cuve, et empilés les uns sur les autres grâce à des systèmes de pieds. Chacun des plateaux est un élément creux sur lequel sont fixées un grand nombre de cartouches de filtration, en parallèle, typiquement par vissage de l'extrémité supérieure de la cartouche sur des parties filetées correspondant du plateau.

La cuve 10' comprend une ouverture pour l'huile sale 16', inférieure et une ouverture de trop plein 17', située au-dessus des plateaux. La filtration est réalisée au travers du média filtrant des différentes cartouches de filtration, de l'extérieur vers l'intérieur, l'huile filtrée par les cartouches étant collectée dans chacun des plateaux, qui sont des éléments creux, puis conduit vers une sortie du plateau pour l'huile propre. Les sorties d'huile des différents plateaux sont respectivement connectées, de manière étanche, à des ouvertures réparties sur la hauteur de la cuve, grâce à des jeux de brides 19'. Les différentes sorties 18' d'huile filtrée se rejoignent dans un même conduit vertical.

En fin de vie des cartouches de filtration, leur remplacement s'opère en retirant les différents éléments plateaux de la cuve par l'ouverture supérieure du couvercle, en commençant par le plateau supérieur et jusqu'au plateau inférieur. En raison des jeux de brides, internes à la cuve, chaque plateau ne peut être déplacé et retiré qu'une fois les différentes vis et joint déposés, obligeant l'opérateur à des opérations fastidieuses de démontage à l'intérieur de la cuve. Similairement, une fois les cartouches remplacées, lorsque les éléments plateaux sont de nouveau insérés et empilés à l'intérieur de la cuve, l'opérateur doit de nouveau serrer les différentes vis et afin de permettre la compression d'un joint assurant l'étanchéité dudit raccord. Ces opérations de vissage, internes à la cuve, sont encore fastidieuses et ralentissent encore les opérations de maintenance.

L'invention est née de la volonté de l'inventeur de proposer un dispositif de filtration à éléments plateaux qui simplifie grandement ces opérations de maintenance.

Aussi l'invention concerne un dispositif 1 de filtration d'huile, comprenant :
- une cuve 2 comprenant une entrée 20 pour de l'huile à filtrer, ainsi qu'un couvercle 3
- au moins un élément plateau 4, 5 ,6, interne à ladite cuve, amovible, apte à être retiré hors de la cuve 2 par l'ouverture supérieure du couvercle, ledit au moins un élément plateau recevant de manière amovible des cartouches de filtration, ledit élément plateau, creux constituant un collecteur pour l'huile filtrée par les cartouches dudit élément plateau, ledit élément plateau comprenant une sortie d'huile filtrée connectée de manière amovible à une sortie 21 correspondante de la cuve par l'intermédiaire d'un raccord 7. De manière classique, les cartouches de filtration peuvent être fixées à la sous-face dudit élément plateau, par vissage des extrémités supérieures des cartouches de filtration dans des parties filetées correspondant sur la sous-face dudit élément plateau 4, 5, 6.

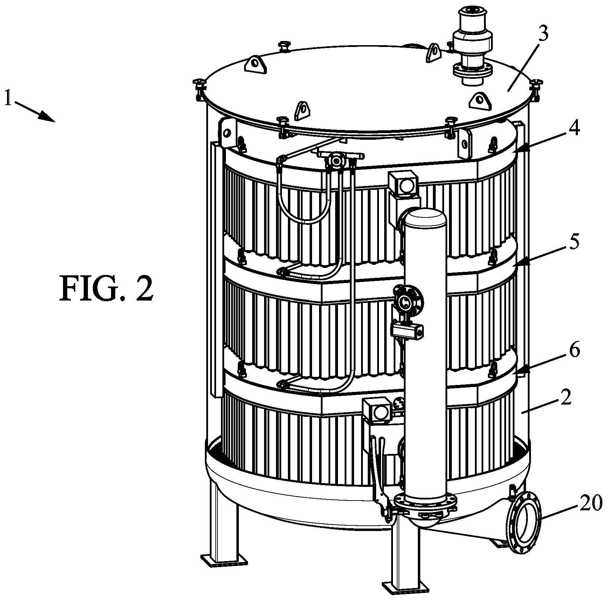

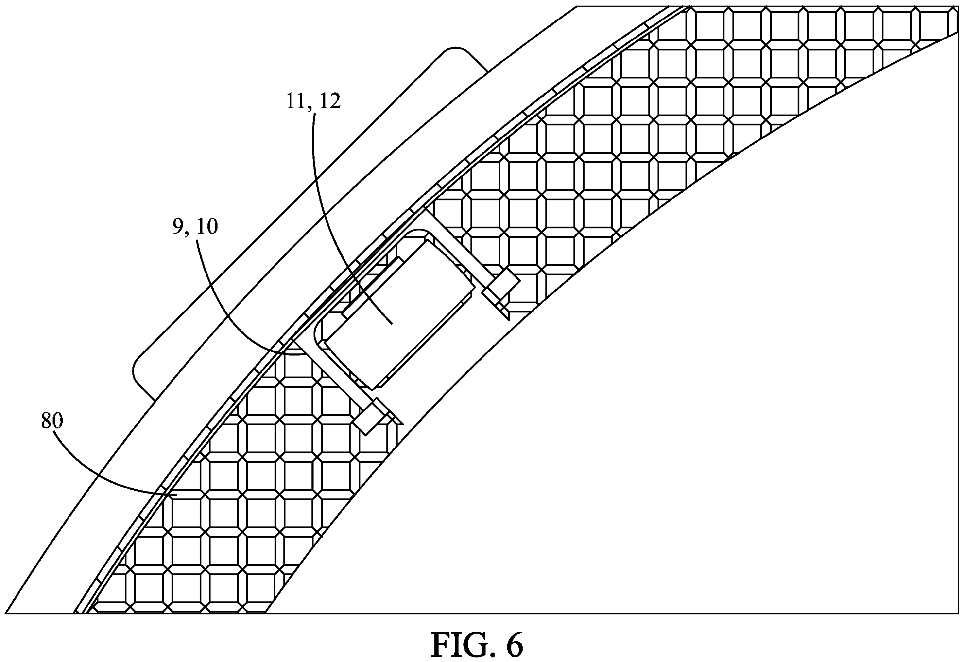

Selon l'invention, ledit raccord 7 comprend une première partie 70 (ou 74) solidaire dudit au moins un élément plateau et une deuxième partie 71 (ou 75) solidaire de la cuve, aptes à coopérer mutuellement par l'intermédiaire d'un joint 72 pour assurer une connexion étanche entre la sortie d'huile dudit élément plateau 4,5,6 et la sortie correspondante de la cuve 2. Avantageusement, et selon un premier mode de réalisation, les deux parties 70,71 dudit raccord 7 sont agencées de telle façon que la connexion étanche des deux parties 70, 71 du raccord, et inversement leur déconnexion, est assurée uniquement par le déplacement vertical dudit élément plateau 4,5,6 dans ladite cuve 2. Un tel mode de réalisation est illustré en détail à titre d'exemple non limitatif des figures 2 à 8.

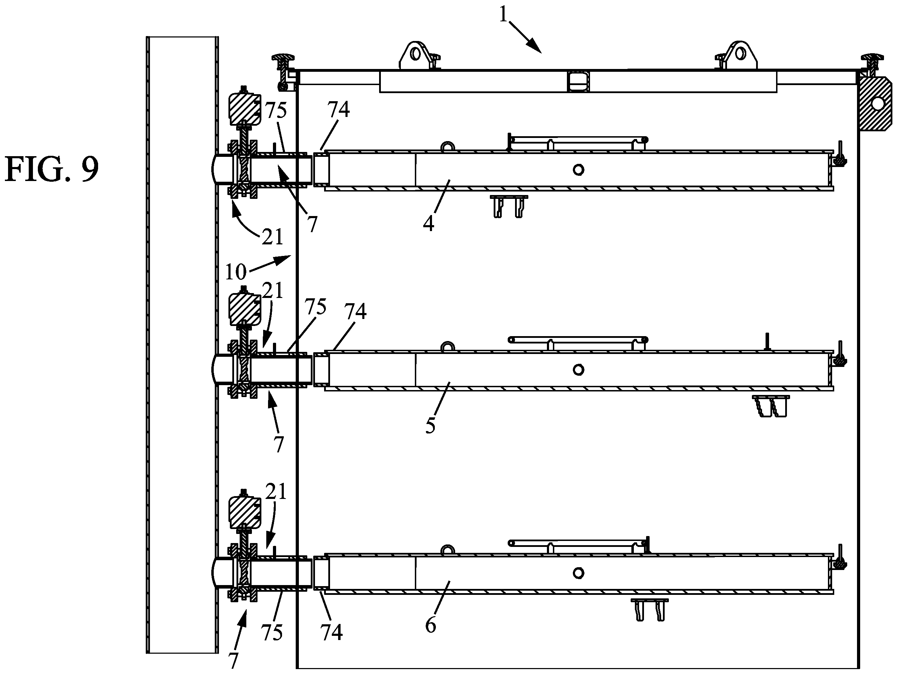

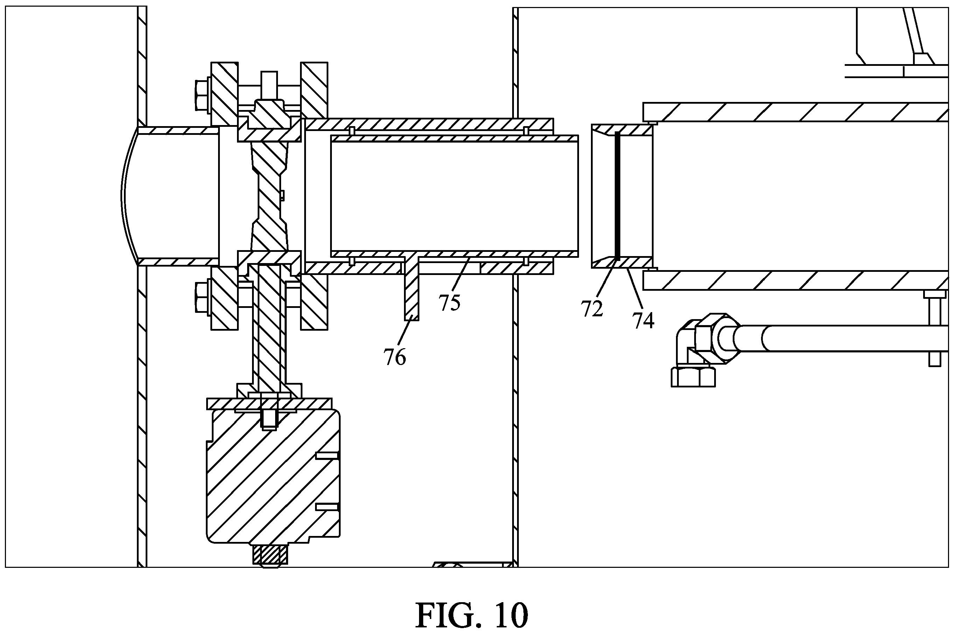

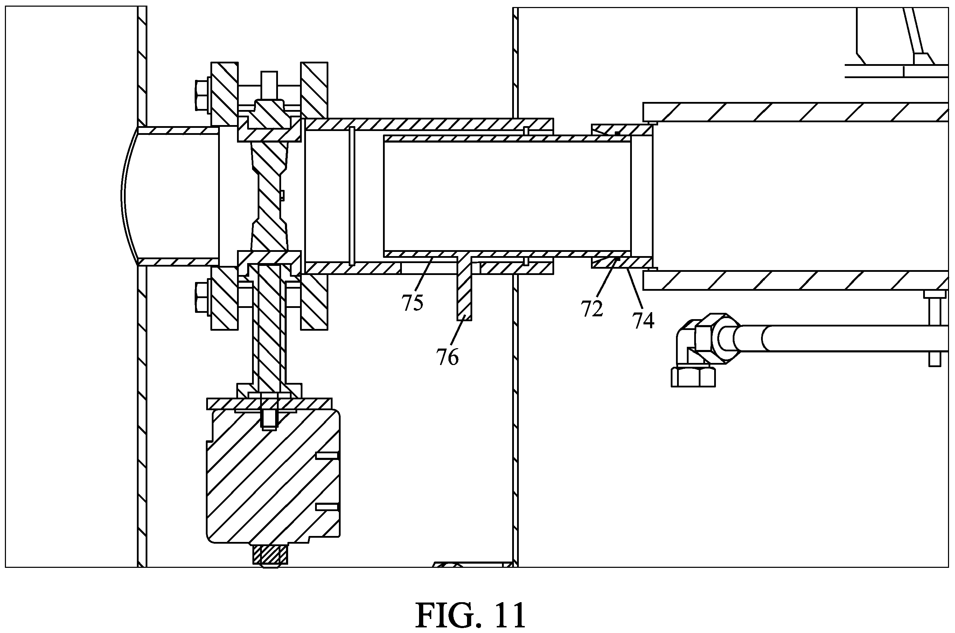

Selon une autre alternative ne faisant pas partie de la présente invention, illustrée non limitativement des figures 9 à 11, les deux parties 74,75 du raccord 7 peuvent être mobiles l'une par rapport à l'autre, actionnables de l'extérieur de la cuve 2, alors que ledit élément plateau correspondant est en position fixe dans la cuve, aptes à passer d'une première position de déconnexion (voir figure 10), autorisant le levage et le retrait dudit élément plateau, vers une deuxième position de connexion (voir figure 11) dans laquelle les deux parties 74,75 coopèrent avec le joint 72 pour assurer la connexion étanche entre la sortie d'huile dudit élément plateau et la sortie correspondante de la cuve.

Ainsi, dans les deux cas, et contrairement à l'état de la technique illustré à la figure 1 nécessitant le serrage de vis, pour chaque élément plateau, afin de raccorder la sortie d'huile à la sortie correspondante de la cuve, l'étanchéité de la connexion entre les deux éléments du raccord peut être obtenue sans intervention d'un opérateur dans la cuve, par le déplacement vertical, et de préférence sous l'action de la masse de l'élément plateau selon le premier mode de réalisation, et sans nécessiter le serrage de vis comme dans l'état de la technique. Dans le deuxième mode de réalisation, le déplacement entre les deux parties 74, 75 peut être un déplacement en translation, par exemple sensiblement horizontal assurant l'étanchéité entre les parties 74 et 75.

Avantageusement les étapes de retrait du ou des éléments plateaux 4, 5, 6 hors de la cuve, peuvent être effectuées, à l'aide de moyen de levage et sans nécessiter d'intervention d'un opérateur à l'intérieur de la cuve, en particulier pour des opérations de dévissage selon l'état de la technique.

De manière classique, l'entrée 20 de la cuve pour l'huile à filtrer est de préférence positionnée en partie basse de la cuve, à un niveau inférieur à celui des éléments plateaux 4, 5, 6. La cuve peut encore présenter, une sortie de trop plein 22 (i.e. une surverse) par laquelle peut s'évacuer l'huile non filtrée, et en vue d'être recyclée à l'entrée du dispositif 1.

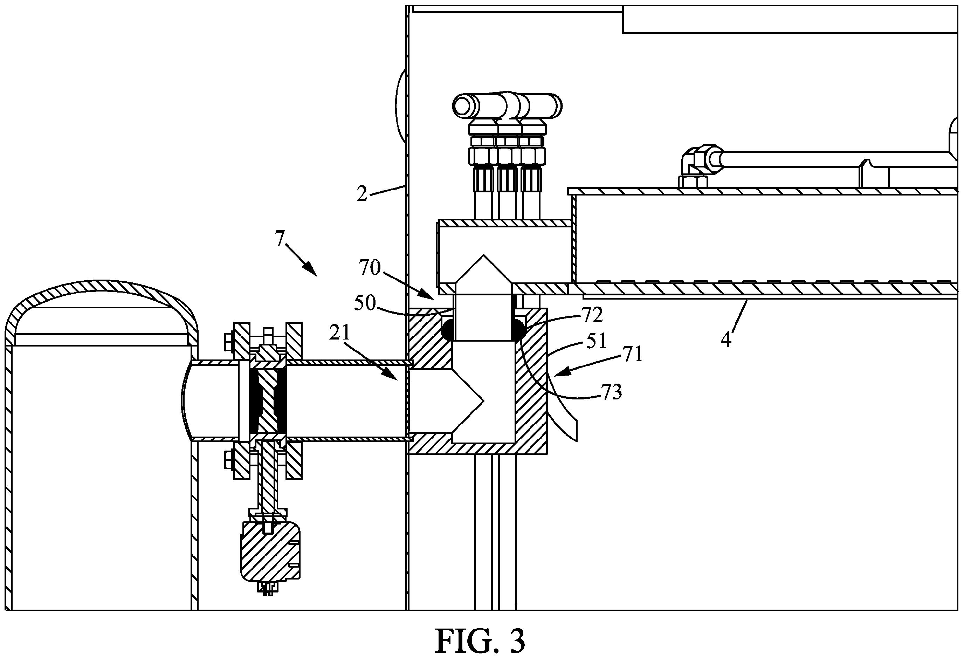

Selon le premier mode de réalisation illustré non limitativement à la figure 3, ladite première partie 70 et la deuxième partie 71 dudit raccord 7 comprennent respectivement deux sections de conduites SO, S1, d'axes verticaux, inter-pénétrantes, par l'intermédiaire d'un joint 72, dans ladite position de connexion dudit raccord 7.

La première partie 70 solidaire dudit élément plateau peut comprendre ainsi une section de conduite SO s'étendant verticalement vers le bas à partir de la sous-face dudit élément plateau 2 présentant une embouchure inférieure, ladite second partie comprenant une section de conduite SI s'étendant verticalement vers le haut et présentant une embouchure supérieure.

Lorsque l'élément plateau 4 est descendu vers le bas, et selon le mode de réalisation de la figure 3, l'extrémité terminale de la section SO pénètre dans la section de conduite SI de plus grand diamètre et de telle façon que, dans ladite position de connexion dudit raccord, les deux sections de conduite S0, S1 coopèrent de manière étanche.

Dans cette position de connexion, ladite première partie 70 dudit raccord solidaire dudit élément plateau est positionnée au-dessus de ladite seconde partie 71 dudit raccord solidaire de la cuve 2. Selon un mode de réalisation, l'extrémité terminale de la section de conduite SO peut être pourvue dudit joint 72, qui est un joint circulaire, notamment annulaire, solidaire de cette extrémité. La section SI présente par ailleurs, de préférence, au moins sur une partie de sa hauteur, un siège 73 permettant de comprimer le joint 72 entre les deux sections S0, S1 de conduite et afin d'assurer l'étanchéité dudit raccord.

Selon ce mode de réalisation, et plus généralement, l'effort de compression sur le joint assurant l'étanchéité entre la première partie 70 et la deuxième partie 71 du raccord 7 est assuré uniquement par utilisation de la masse dudit élément plateau et des cartouches de filtration que ledit élément plateau supporte. Bien entendu, et de préférence, ce joint 72 ne supporte pas la totalité de la masse de cet ensemble, le dispositif 1 pouvant à cet effet présenter un système de réglage 15 de la répartition de la masse dudit élément plateau sur ce joint 72, et dont la structure d'un mode de réalisation est développée par la suite.

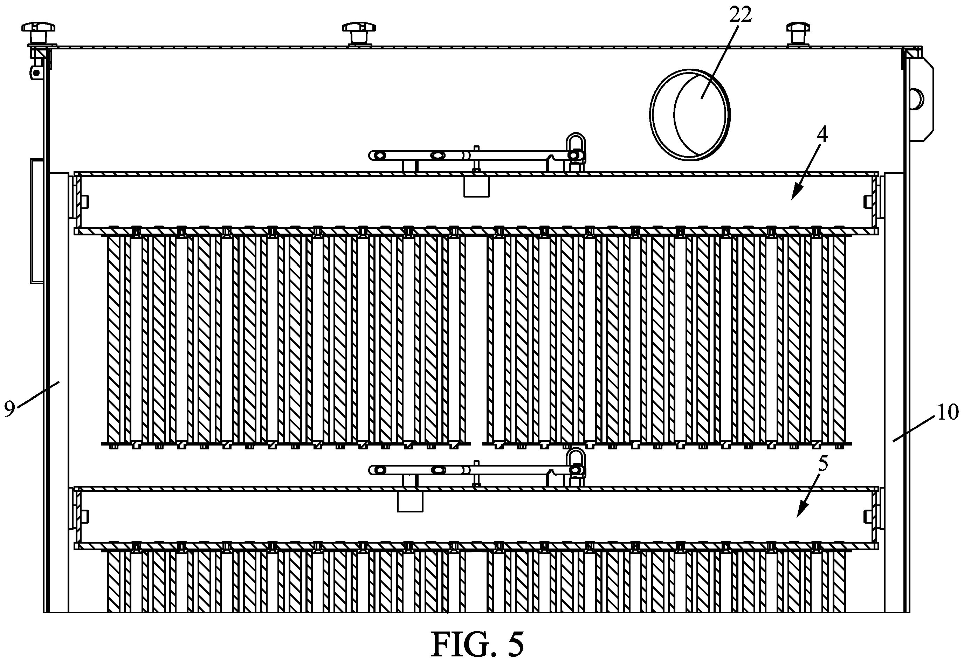

Selon un mode de réalisation avantageux, illustré non limitativement aux figures 5, 6 et 7, le dispositif présente des moyens de guidage verticaux disposés entre la cuve 2 et ledit élément plateau 4,5,6. Ces moyens de guidage sont agencés de manière à garantir le bon positionnement relatifs des deux parties 70, 71, du raccord 7 lorsque ledit élément plateau est descendu dans ladite cuve, et en particulier de manière à assurer que les deux sections de conduites SO, SI engageront correctement, sans décalage angulaire.

Selon un mode de réalisation, les moyens de guidage comprennent plusieurs rails de guidage 9, 10, orientés verticalement dans la cuve et fixés à cette dernière, ainsi que des parties de guidage 11, 12 solidaires dudit élément plateau, destinées à coopérer avec lesdits rails de guidage. Les rails de guidage 9,10 peuvent être de section en U, les parties de guidages 11,12 solidaires dudit élément plateau 4,5,6 comprenant des galets destinés à être insérés dans le volume intérieur des rails de guidage 9,10.

Selon un mode de réalisation, les parties de guidage 11,12 dudit élément plateau 4,5,6, notamment les galets, sont diamétralement opposées sur ledit élément plateau, et destiné à coopérer au guidage avec deux rails 9,10 correspondant de la cuve.

Selon un mode de réalisation, le dispositif présente encore des butées 13,14 destinées à stopper la course verticale dudit élément plateau 4, 5, 6 dans ladite cuve 2 et à un niveau correspondant permettant la connexion étanche des deux parties 70, 71 du raccord 7.

Selon un mode de réalisation, ces butées 13, 14 sont situées sur les rails de guidage 9,10 et de manière à engager avec les parties de guidage 11,12 des éléments plateaux en particulier lesdits galets. Cette configuration autorise un pivotement dudit élément plateau 4,5,6 autour de l'axe des galets lorsque stoppé par les butées 13 14. Cette possibilité de pivotement de l'élément plateau peut être mise à profit de différentes façons.

Selon une première alternative, le dispositif de réglage de la répartition de la masse dudit élément plateau sur le joint 72 utilise cette possibilité de pivotement et comprend un système d'appui réglable 15 entre ledit élément plateau 4,5,6 et une partie fixe 18 de la cuve, ledit système 15 étant disposé diamétralement opposé sur ledit élément plateau par rapport audit raccord 7.

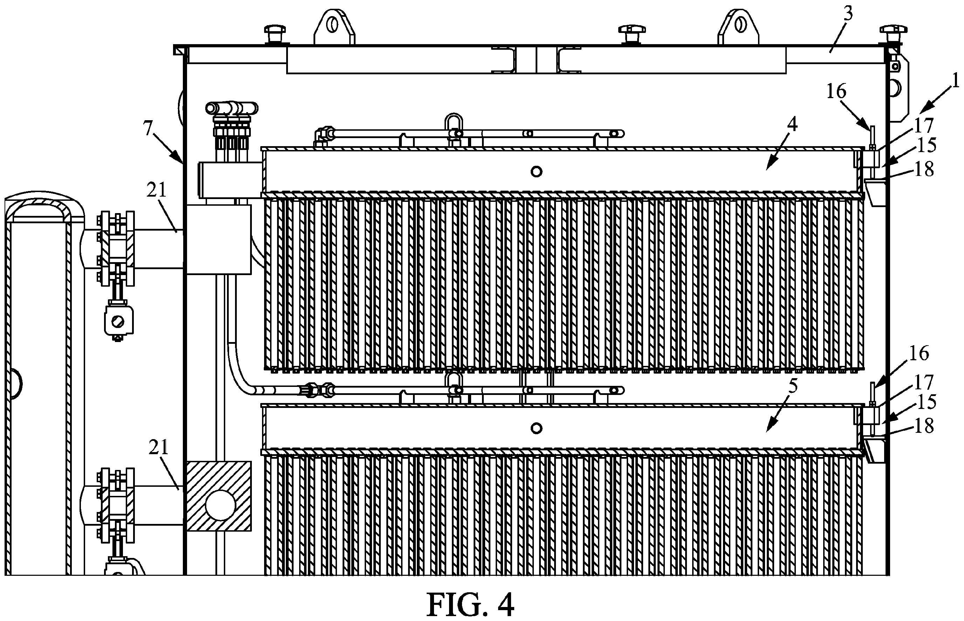

Le système d'appui réglable 15 est illustré à titre d'exemple non limitatif à la figure 4, et comprend une tige filetée 16, coopérant par vissage dans une partie taraudée 17 solidaire dudit élément plateau. L'extrémité inférieure de cette tige filetée 16 est destinée à coopérer en appui sur une partie fixe 18 de la cuve.

Le vissage de la tige filetée, selon un premier sens, permet à la tige filetée d'appuyer plus fortement sur la partie fixe 18, et ainsi, grâce à la possibilité de pivotement autour de l'axe des galets, de charger le joint 72 diamétralement opposé. A l'inverse, le vissage de la tige filetée dans l'autre sens permet à la tige filetée d'appuyer moins fortement sur la partie fixe 18, et ainsi de décharger le joint 72.

D'une manière générale, le dispositif présente plusieurs éléments plateaux 4, 5, 6 superposés dans le volume intérieur de la cuve 2, la connexion de chaque élément plateau 4, 5, 6 à la sortie correspondante de la cuve étant réalisée au moyen dudit raccord 7 de telle façon que la connexion étanche des deux parties 70,71 du raccord 7, et inversement leur déconnexion, est assurée selon l'invention uniquement par le déplacement vertical dudit élément plateau dans ladite cuve.

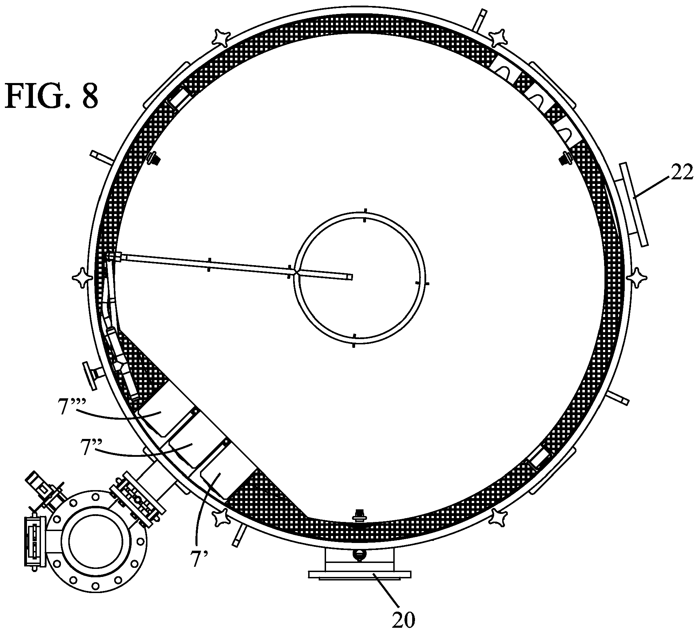

Pour ce faire tel qu'illustré à la figure 8, les positions des différents raccords 7',7",7'" correspondant aux différents éléments plateaux sont de préférence décalées angulairement autour de l'axe de la cuve 2. Les éléments plateaux 4,5,6 peuvent être au nombre de trois par dispositif, à titre d'exemple non limitatif.

Selon le premier mode de réalisation d'un tel dispositif à plusieurs éléments plateaux, le cas échéant :
- les différents éléments plateaux 4,5,6 des différents niveaux partagent les mêmes rails de guidage 9, 10,
- les parties de guidage 11, 12 solidaires desdits éléments plateaux, notamment les galets, sont de dimensions croissantes, dudit élément plateau 4 de niveau le plus supérieur, vers ledit élément plateau 6 de niveau le plus inférieur,
- les butées 13, 14 destinées à stopper les courses des différents éléments plateaux 4,5, 6 comprennent des réductions de section, sur les rails de guidage 9,10, chacune des réductions de section étant destinée à assurer le blocage d'une partie de guidage appartenant à un élément plateau déterminé et de telle façon qu'une partie de guidage de plus petite dimension traverse la réduction de section, sans bloquer ledit élément plateau correspondant.

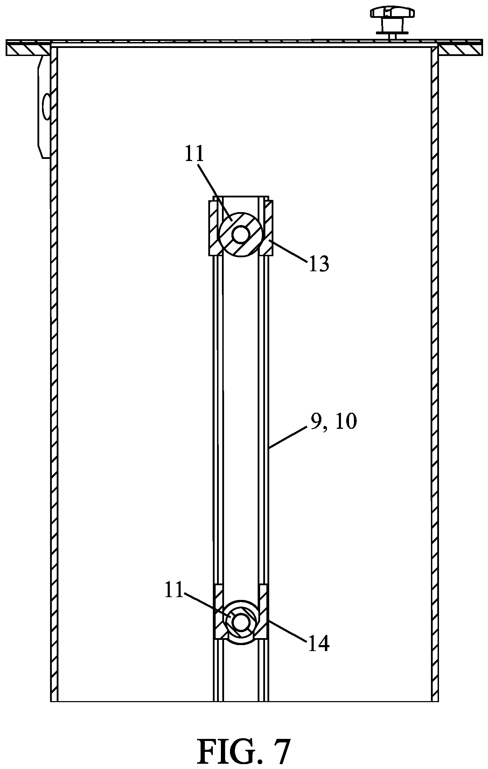

Un tel agencement est illustré à titre d'exemple non limitatif à la figure 7 pour les butées de l'élément plateau supérieur 4, et de l'élément plateau de niveau intermédiaire.

Pour chaque rail de guidage 9 ou 10, la butée 13 pour le galet du plateau supérieur 4 est constituée par une réduction de section dudit rail de guidage, apte à bloquer la descente dudit galet de l'élément plateau supérieur 4. En revanche, les galets de l'élément plateau intermédiaire 5 et les galets de l'élément plateau 6 inférieur, de plus petites dimensions, traversent ces réductions de section, permettant à ces éléments de poursuivre leur descente.

De manière similaire, et pour chaque rail de guidage 9,10, la butée 14 pour le galet du plateau intermédiaire est constituée par une réduction de section dudit rail de guidage 9 ou 10, apte à bloquer la descente de l'élément plateau intermédiaire 5. En revanche, les galets de l'élément plateau inférieur 6, de plus petite dimension, traversent ces réductions de section, permettant à cet élément plateau de poursuivre sa descente et jusqu'à ce que ces galets ne rencontrent leur butée.

D'une manière générale, la cuve du dispositif de filtration peut comprendre une grille 80, interne à la cuve, disposée entre l'entrée d'huile sale 20 et les différents éléments plateaux 4,5,6 et leurs cartouches.

L'entrée 20 peut, en dehors du fonctionnement à la filtration, être utilisée comme sortie pour vidanger la cuve. Dans ce cas, la grille 80 permet de retenir d'éventuels déchets (par exemple des morceaux de cartouches dégradées) lors des opérations de vidange et afin d'éviter que ces déchets ne soient aspirés par les pompes et ne les détériorent.

Le mode de réalisation qui ne fait pas parti de la présente invention est illustré en détail, à titre d'exemple non limitatif aux figures 9 à 11.

Aussi la première partie 74 du raccord, solidaire de la sortie dudit élément plateau peut comprendre une section de conduite, par exemple sensiblement d'axe horizontal, terminée par une embouchure, rigidement solidaire du corps de l'élément plateau. La deuxième partie 75 du raccord, solidaire de la cuve peut comprendre une section de conduite, notamment d'axe horizontal, destinée à pénétrer l'embouchure de la première partie 74.

Dans la position de déconnexion illustrée à la figure 10, la deuxième partie 75 est dans une position escamotée (i.e. non pénétrante), alors que dans la position illustrée à la figure 11, la deuxième partie 75 pénètre dans l'embouche de la première partie 74, en comprimant le joint 72, obtenant une connexion étanche.

Le mouvement relatif entre les deux parties 74,75 peut être obtenu grâce à la deuxième partie 75, qui peut être montée coulissante par rapport à une partie fixe, notamment dans une section de tube de plus grand diamètre, selon une course axiale limitée par rapport à la cuve, pour passer de la position de connexion vers la position de déconnexion.

D'une manière avantageuse, le passage d'une position à l'autre est actionné en dehors de la cuve, par exemple manuellement au moyen d'une poignée 76, selon le mode de réalisation illustré. Bien évidemment, le passage d'une position à l'autre peut être automatisé par tout actionneur adapté (vérin pneumatique, électrique...) et dans le même but.

Dans tous les cas, l'invention permet de réaliser les opérations de maintenance classique, y compris le levage et retrait des éléments plateaux, et avantageusement, sans nécessiter des opérations fastidieuses de dévissage à l'intérieur de la cuve.

L'invention concerne encore une installation de recyclage et de filtration d'huile d'un laminoir comprenant un circuit d'huile comprenant successivement:
- un réservoir d'huile sale,
- un système de filtration comprenant plusieurs dispositifs de filtration 1 selon l'invention,
- un réservoir d'huile propre.

Naturellement d'autres modes de réalisations auraient pu être envisagés par l'homme du métier, sans pour autant sortir du cadre de l'invention tel que défini par les revendications ci-après.

### NOMENCLATURE

1. Dispositif de filtration,
2. Cuve,
20. Entrée huile sale (Cuve),
21. Sortie huile filtrée (Cuve),
22. Trop plein,
3. Couvercle,
4, 5, 6. Eléments plateaux,
7, 7',7", 7'". Raccord,
70, 71. Première et deuxième partie du raccord (mode de réalisation des figures 2 à 8),
72. Joint (Raccord),
73. Siège (section S1),
74,75. Première et deuxième partie du raccord (mode de réalisation des figures 9 à 11),
76. Poignée,
9,10. Rails de guidage,
11,12. Partie de guidage (éléments plateaux 4, 5 ou 6)
13,14. Butées stoppant la course verticale des éléments plateaux,
15. Système d'appui réglage,
16. Tige filetée (Système 15),
17. Partie taraudée (Système 15),
18. Appui fixe (Système 15),
80. Grille,
SO. Section de conduite,
S1. Section de conduite.

### Etat de la technique des dispositifs de filtration (Figure 1 et Figure 1a)

1'. Dispositif de filtration à cinq plateaux,
10'. Cuve,
11', 12', 13', 14', 15'. Eléments plateaux,
16'. Ouverture entrée huile sale,
17'. Ouverture trop plein (surverse),
18'. Sorties huile filtrée,
19'. Jeux de brides.

## Revendications

1. Dispositif (1) de filtration d'huile, comprenant :
- une cuve (2) comprenant une entrée pour de l'huile à filtrer, ainsi qu'un couvercle (3)
- au moins un élément plateau (4,5,6), interne à ladite cuve, amovible, apte à être retiré hors de la cuve (2) par l'ouverture supérieure du couvercle, ledit au moins un élément plateau recevant de manière amovible des cartouches de filtration, ledit élément plateau, creux constituant un collecteur pour l'huile filtrée par les cartouches dudit élément plateau, ledit élément plateau comprenant une sortie d'huile filtrée connectée de manière amovible à une sortie correspondante (21) de la cuve par l'intermédiaire d'un raccord (7),
**caractérisé en ce que** ledit raccord (7) comprend une première partie (70 ;74) solidaire dudit au moins un élément plateau et une deuxième partie (71 ; 75) solidaire de la cuve, aptes à coopérer mutuellement par l'intermédiaire d'un joint (72) pour assurer une connexion étanche entre la sortie d'huile dudit élément plateau (4, 5,6), et la sortie correspondante de la cuve,
et dans lequel, le dispositif présente plusieurs éléments plateaux (4, 5, 6) superposés dans le volume intérieur de la cuve (2), la connexion de chaque élément plateau (4, 5, 6) à la sortie correspondante de la cuve étant réalisée au moyen dudit raccord (7), les deux parties (70,71) dudit raccord (7) étant agencées de telle façon que la connexion étanche des deux parties (70,71) du raccord, et inversement leur déconnexion, est assurée uniquement par le déplacement vertical dudit élément plateau dans ladite cuve, les positions des différents raccords (7',7",7'") correspondant aux différents éléments plateaux étant décalées angulairement autour de l'axe de la cuve (2),
dans lequel la première partie (70) et la deuxième partie (71) dudit raccord comprennent respectivement deux sections de conduites, d'axes verticaux, inter-pénétrantes, par l'intermédiaire dudit joint (72), dans ladite position de connexion dudit raccord (7), et dans lequel la première partie (70) solidaire dudit élément plateau (4,5,6) comprend une section de conduite (S0) s'étendant verticalement vers le bas à partir de la sous-face dudit élément plateau (2), présentant une embouchure inférieure, ladite second partie comprenant une section de conduite (S1) s'étendant verticalement vers le haut, présentant une embouchure supérieure, et de telle façon que, dans ladite position de connexion dudit raccord (7), les deux sections de conduite (S0, S1) coopèrent de manière étanche, ladite première partie (70) dudit raccord solidaire dudit élément plateau étant positionnée au-dessus de ladite seconde partie (71) dudit raccord solidaire de la cuve.

2. Dispositif selon la revendication 1, dans lequel, et dans ladite position de connexion dudit raccord (7) la compression du joint (72) d'étanchéité assurant l'étanchéité entre la première partie (70) et la deuxième partie (71) du raccord est assurée uniquement par utilisation de la masse dudit élément plateau et des cartouches de filtration qu'il supporte.

3. Dispositif selon la revendication 2, présentant un dispositif de réglage de la répartition de la masse dudit élément plateau sur le joint (72).

4. Dispositif selon l'une des revendications 1 à 3, dans lequel le dispositif présente des moyens de guidage verticaux disposés entre la cuve (2) et ledit élément plateau (4,5,6), agencés de manière à garantir le bon positionnement relatifs des deux parties (70, 71,) du raccord (7) lorsque ledit élément plateau est descendu dans ladite cuve.

5. Dispositif selon la revendication 4, dans lequel les moyens de guidage comprennent plusieurs rails de guidage (9, 10), orientés verticalement dans la cuve (2) et fixés à cette dernière, ainsi que des parties de guidage (11,12) solidaires dudit éléments plateau, destinées à coopérer lesdits rails de guidage.

6. Dispositif selon la revendication 5, dans lequel les parties de guidages (11,12) solidaires dudit élément plateau comprennent des galets destinés à être insérés dans le volume intérieur des rails de guidage (9,10).

7. Dispositif selon l'une des revendications 1 à 6, présentant des butées (13,14) destinées à stopper la course verticale dudit élément plateau (4, 5, 6) dans ladite cuve et à un niveau correspondant permettant la connexion étanche des deux parties (70, 71) du raccord (7).

8. Dispositif selon la revendication 5 ou 6, pris en combinaison avec la revendication 7 dans lequel :
- les différents éléments plateaux (4,5,6) des différents niveaux partagent les mêmes rails de guidage (9, 10),
- les parties de guidage (11, 12) solidaires desdits éléments plateaux, notamment les galets, sont de dimensions croissantes, dudit élément plateau (4) de niveau le plus supérieur, vers ledit élément plateau (6) de niveau le plus inférieur,
- les butées (13, 14) destinées à stopper les courses des différents éléments plateaux (4,5, 6) comprennent des réductions de section, dans les rails de guidage (9,10), chacune des réductions de section étant destinée à assurer le blocage d'une partie de guidage (11,12) appartenant à un élément plateau déterminé et de telle façon qu'une partie de guidage de plus petite dimension traverse la réduction de section, sans bloquer ledit élément plateau correspondant.

9. Dispositif selon les revendications 3,6 et 7, dans lequel les galets sont disposés diamétralement opposés sur ledit élément plateau et destinés à coopérer avec deux rails de guidage (9,10) de ladite cuve, lesdites butées (13,14) coopérant avec les galets dudit plateau de manière à autoriser un pivotement dudit élément plateau (4,5,6) autour de l'axe des galets, et dans lequel le dispositif de réglage de la répartition de la masse dudit élément plateau sur le joint (72) utilise cette possibilité de pivotement et comprend un système d'appui réglable (15) entre ledit élément plateau et une partie fixe de la cuve, disposé diamétralement opposé sur ledit élément plateau par rapport audit raccord (7).

10. Dispositif selon l'une des revendications 1 à 9, dans lequel les éléments plateaux sont au nombre de trois.

11. Installation de recyclage et de filtration d'huile d'un laminoir comprenant un circuit d'huile comprenant successivement:
- un réservoir d'huile sale,
- un système de filtration comprenant un ou plusieurs dispositifs selon l'une des revendications 1 à 10, et
- un réservoir d'huile propre.

## Patentansprüche

1. Vorrichtung (1) zur Filtrierung von Öl, umfassend:
- einen Behälter (2), umfassend einen Einlass für das zu filtrierende Öl, sowie einen Deckel (3),
- mindestens ein lösbares Plattenelement (4, 5, 6) im Inneren des genannten Behälters, das dafür geeignet ist, aus dem Behälter (2) durch die obere Öffnung des Deckels entnommen zu werden, wobei das genannte mindestens eine Plattenelement lösbar Filtrierungskartuschen aufnimmt, wobei das genannte hohle Plattenelement einen Kollektor für das Öl darstellt, das durch die Kartuschen des genannten Plattenelements filtriert wird, wobei das genannte Plattenelement einen Auslass für das filtrierte Öl umfasst, der lösbar mit einem entsprechenden Auslass (21) des Behälters mit Hilfe eines Anschlusses (7) verbunden ist,
**dadurch gekennzeichnet, dass** der Anschluss (7) einen ersten Teil (70; 74), der fest mit dem genannten mindestens einen Plattenelement verbunden ist, und einen zweiten Teil (71; 75), der fest mit dem Behälter verbunden ist, umfasst, die dafür geeignet sind, gegenseitig mit Hilfe eines Dichtungselements (72) zusammenzuwirken, um eine dichte Verbindung zwischen dem Ölauslass des genannten Plattenelements (4, 5, 6) und dem entsprechenden Auslass des Behälters sicherzustellen,
und wobei die Vorrichtung mehrere übereinander liegende Plattenelemente (4, 5, 6) in dem Innenvolumen des Behälters (2) aufweist, wobei die Verbindung jedes Plattenelements (4, 5, 6) mit dem entsprechenden Auslass des Behälters mit Hilfe des genannten Anschlusses (7) vorgenommen wird, wobei die beiden Teile (70, 71) des genannten Anschlusses (7) derart eingerichtet sind, dass die dichte Verbindung der beiden Teile (70, 71) des Anschlusses und umgekehrt ihr Trennen einzig durch die vertikale Verschiebung des genannten Plattenelements in dem genannten Behälter sichergestellt wird, wobei die Positionen der verschiedenen Anschlüsse (7', 7", 7"'), die verschiedenen Plattenelementen entsprechen, winkelmäßig um die Achse des Behälters (2) versetzt sind,
wobei der erste Teil (70) und der zweite Teil (71) des genannten Anschlusses jeweils zwei Abschnitte von ineinander übergehenden Leitungen mit vertikalen Achsen mit Hilfe des genannten Dichtungselements (72) in der genannten Verbindungsposition des genannten Anschlusses (7) umfassen, und wobei der erste Teil (70), der mit dem genannten Plattenelement (4, 5, 6) fest verbunden ist, einen Abschnitt einer Leitung (S0) umfasst, die sich vertikal nach unten von der Unterseite des genannten Plattenelements (2) erstreckt, und eine untere Mündung aufweist, wobei der genannte zweite Teil einen Abschnitt einer Leitung (S1) umfasst, die sich vertikal nach oben erstreckt, und eine obere Mündung aufweist, und derart, dass in der genannten Verbindungsposition des genannten Anschlusses (7) die beiden Leitungsabschnitte (S0, S1) dicht zusammenwirken, wobei der genannte erste Teil (70) des genannten festen Anschlusses des genannten Plattenelements über dem genannten zweiten Teil (71) des genannten Anschlusses positioniert ist, der fest mit dem Behälter verbunden ist.

2. Vorrichtung nach Anspruch 1, wobei, und in der genannten Verbindungsposition des genannten Anschlusses (7), das Zusammendrücken des Dichtungselements (72), das die Dichtheit zwischen dem ersten Teil (70) und dem zweiten Teil (71) des Anschlusses sicherstellt, einzig durch die Verwendung der Masse des genannten Plattenelements und der Filtrierungskartuschen, die es trägt, sichergestellt wird.

3. Vorrichtung nach Anspruch 2, umfassend eine Regelungsvorrichtung der Verteilung der Masse des genannten Plattenelements auf das Dichtungselement (72).

4. Vorrichtung nach einem der Ansprüche 1 bis 3, wobei die Vorrichtung vertikale Führungsmittel aufweist, die zwischen dem Behälter (2) und dem genannten Plattenelement (4, 5, 6) angeordnet sind, und die derart eingerichtet sind, dass die gute relative Positionierung der beiden Teile (70, 71) des Anschlusses (7) garantiert wird, wenn das genannte Plattenelement in dem genannten Behälter abgesenkt wird.

5. Vorrichtung nach Anspruch 4, wobei die Führungsmittel mehrere Führungsschienen (9, 10) umfassen, die vertikal in dem Behälter (2) orientiert sind und an diesem Letzteren befestigt sind, sowie Führungsteile (11, 12), die fest mit den genannten Plattenelementen verbunden sind, und die dazu bestimmt sind, mit den Führungsschienen zusammenzuwirken.

6. Vorrichtung nach Anspruch 5, wobei die Führungsteile (11, 12), die fest mit dem genannten Plattenelement verbunden sind, Rollen umfassen, die dazu bestimmt sind, in das Innenvolumen der Führungsschienen (9, 10) eingesetzt zu werden.

7. Vorrichtung nach einem der Ansprüche 1 bis 6, umfassend Anschläge (13, 14), die dazu bestimmt sind, den vertikalen Lauf des genannten Plattenelements (4, 5, 6) in dem genannten Behälter und auf einer entsprechenden Höhe zu stoppen, welche die dichte Verbindung der beiden Teile (70, 71) des Anschlusses (7) gestattet.

8. Vorrichtung nach Anspruch 5 oder 6, in Kombination mit Anspruch 7, wobei:
- die verschiedenen Plattenelemente (4, 5, 6) der verschiedenen Höhen sich dieselben Führungsschienen (9, 10) teilen,
- die Führungsteile (11, 12), die fest mit den genannten Plattenelementen verbunden sind, insbesondere die Rollen, zunehmende Abmessungen aufweisen, von dem genannten Plattenelement (4) auf der höchsten Höhe zu dem genannten Plattenelement (6) auf der niedrigsten Höhe,
- die Anschläge (13, 14), die dazu bestimmt sind, die verschiedenen Läufe der verschiedenen Plattenelemente (4, 5, 6) zu stoppen, Querschnittsreduktionen in den Führungsschienen (9, 10) aufweisen, wobei jede Querschnittsreduktion dazu bestimmt ist, die Blockierung eines Führungsteils (11, 12) sicherzustellen, der zu einem bestimmten Plattenelement gehört, und derart, dass ein Führungsteil mit der kleinsten Abmessung die Querschnittsreduktion passiert, ohne das genannte entsprechende Plattenelement zu blockieren.

9. Vorrichtung nach den Ansprüche 3, 6 und 7, wobei die Rollen einander diametral gegenüberliegend auf dem genannten Plattenelement angeordnet sind und dazu bestimmt sind, mit zwei Führungsschienen (9, 10) des genannten Behälters zusammenzuwirken, wobei die genannten Anschläge (13, 14) mit den Rollen der genannten Platte zusammenwirken, um ein Schwenken des genannten Plattenelements (4, 5, 6) um die Achse der Rollen zu gestatten, und wobei die Vorrichtung zur Regelung der Verteilung der Masse des genannten Plattenelements auf dem Dichtungselement (72) diese Schwenkmöglichkeit nützt und ein regelbares Anlagesystem (15) zwischen dem genannten Plattenelement und einem festen Teil des Behälters umfasst, das diametral gegenüberliegend auf dem genannten Plattenelement in Bezug auf den genannten Anschluss (7) angeordnet ist.

10. Vorrichtung nach einem der Ansprüche 1 bis 9, wobei die Anzahl der Plattenelemente drei ist.

11. Anlage zum Recycling und zur Filtrierung von Öl eines Walzwerks, umfassend einen Ölkreislauf, umfassend aufeinanderfolgend:
- ein Reservoir für verschmutztes Öl,
- ein Filtrierungssystem, umfassend eine oder mehrere Vorrichtungen nach einem der Ansprüche 1 bis 10, und
- ein Reservoir für sauberes Öl.

## Claims

1. A device (1) for filtering oil, comprising:
- a tank (2) comprising an inlet for the oil to be filtered, as well as a cover (3)
- at least one tray element (4, 5, 6), internal to said tank, removable, capable of being withdrawn from the tank (2) through the upper opening of the cover, said at least one tray element removably receiving filter cartridges, said hollow tray element constituting a collector for the oil filtered by the cartridges of said tray element, said tray element comprising a filtered oil outlet removably connected to a corresponding outlet (21) of the tank via a connector (7),
**characterised in that** said connector (7) comprises a first part (70; 74) integral with said at least one tray element and a second part (71; 75) integral with the tank, capable of cooperating with each other by means of a seal (72) to ensure a sealed connection between the oil outlet of said tray element (4, 5,6), and the corresponding outlet of the tank,
and wherein, the device has several tray elements (4, 5, 6) superimposed in the internal volume of the tank (2), the connection of each tray element (4, 5, 6) to the corresponding outlet of the tank being performed by means of said connector (7), the two parts (70, 71) of said connector (7) being arranged in such a way that the sealed connection of the two parts (70, 71) of the connector, and conversely their disconnection, is ensured only by the vertical displacement of said tray element in said tank, the positions of the various connectors (7', 7", 7'") corresponding to the various tray elements being angularly offset around the axis of the tank (2),
wherein the first part (70) and the second part (71) of said connector respectively comprise two conduit sections, with vertical axes, inter-penetrating, via said seal (72), in said connection position of said connector (7), and wherein the first part (70) integral with said tray element (4, 5, 6) comprises a conduit section (SO) extending vertically downwards from the underside of said tray element (2), having a lower mouthpiece, said second part comprising a conduit section (S1) extending vertically upwards, having an upper mouthpiece, and such that, in said connection position of said connector (7), the two conduit sections (S0, S1) cooperate in a sealed manner, said first part (70) of said connector integral with said tray element being positioned above said second part (71) of said connector integral with the tank.

2. The device according to claim 1, wherein, and in said connection position of said connector (7) the compression of the seal (72) ensuring the sealing between the first part (70) and the second part (71) of the connector is ensured only by using the mass of said tray element and the filtration cartridges that it supports.

3. The device according to claim 2, having a device for adjusting the distribution of the mass of said tray element on the seal (72).

4. The device according to one of claims 1 to 3, wherein the device has vertical guide means disposed between the tank (2) and said tray element (4, 5, 6), arranged so as to guarantee the correct relative positioning of the two parts (70, 71) of the connector (7) when said tray element is lowered into said tank.

5. The device according to claim 4, wherein the guide means comprise several guide rails (9, 10), oriented vertically in the tank (2) and fastened to the latter, as well as guide parts (11, 12) integral with said tray elements, intended to cooperate with said guide rails.

6. The device according to claim 5, wherein the guide parts (11, 12) integral with said tray element comprise rollers intended to be inserted into the internal volume of the guide rails (9, 10).

7. The device according to one of claims 1 to 6, having stops (13, 14) intended to stop the vertical stroke of said tray element (4, 5, 6) in said tank and at a corresponding level allowing the sealed connection of the two parts (70, 71) of the connector (7).

8. The device according to claim 5 or 6, as combined with claim 7 wherein:
- the various tray elements (4, 5, 6) of the different levels share the same guide rails (9, 10),
- the guide parts (11, 12) integral with said tray elements, in particular the rollers, are of increasing dimensions, from said tray element (4) of the highest level, to said tray element (6) of the lowest level,
- the stops (13, 14) intended to stop the strokes of the various tray elements (4,5, 6) comprise section reductions, in the guide rails (9, 10), each of the section reductions being intended to ensure the blocking of a guide part (11, 12) belonging to a determined tray element and in such a way that a guide part of smaller dimension passes through the section reduction, without blocking said corresponding tray element.

9. The device according to claims 3, 6 and 7 wherein the rollers are arranged diametrically opposed on said tray element and intended to cooperate with two guide rails (9, 10) of said tank, said stops (13, 14) cooperating with the rollers of said plate so as to allow a pivoting of said tray element (4, 5, 6) about the axis of the rollers, and wherein the device for adjusting the distribution of the mass of said tray element on the seal (72) uses this pivoting possibility and comprises an adjustable bearing system (15) between said tray element and a fixed part of the tank, disposed diametrically opposite on said tray element relative to said connector (7).

10. The device according to one of claims 1 to 9, wherein the tray elements are three in number.

11. An installation for recycling and filtering oil of a rolling mill comprising an oil circuit comprising successively:
- a dirty oil tank,
- a filtration system comprising one or more devices according to one of claims 1 to 10, and
- a clean oil tank.
